(19) Europäisches Patentamt
European Patent Office
Office européen des brevets

(11) Veröffentlichungsnummer: **0 186 747 B1**

# (12) EUROPÄISCHE PATENTSCHRIFT

(45) Veröffentlichungstag der Patentschrift: **06.09.89**

(51) Int. Cl.⁴: **C 07 F 7/00**

(21) Anmeldenummer: **85113287.8**

(22) Anmeldetag: **19.10.85**

(54) **Verfahren zur Herstellung von Orthoestern des Titans, Zirkons oder Hafniums.**

(30) Priorität: **24.12.84 DE 3447297**

(43) Veröffentlichungstag der Anmeldung: **09.07.86 Patentblatt 86/28**

(45) Bekanntmachung des Hinweises auf die Patenterteilung: **06.09.89 Patentblatt 89/36**

(84) Benannte Vertragsstaaten: **BE DE FR GB NL**

(56) Entgegenhaltungen:
**FR-A- 2 004 955**

**CHEMICAL ABSTRACTS, Band 73, Nr. 3, 20. Juli 1970, Seite 373, Nr. 14906u, Columbus, Ohio, US; V.V. YASTREBOV et al.: "Reaction of trimethylmethoxysilane with titanium tetrachloride", & ZH. OBSHCH. KHIM. 1970, 40(3), 604-5**
**CHEMICAL REVIEW, Band 61, Nr. 1, 1961, Seiten 1-24, Washington, DC, US; I. SHIIHARA et al.: "The organic chemistry of titanium"**
**KIRK-OTHMER: "Encyclopedia of chemical technology", 3. Edition, Band 23, John Wiley & Sons, New York, US.**
**CHEMICAL ABSTRACTS, Band 71, Nr. 4, 28. Juli 1969, Seite 58, Nr. 13972j, Columbus, Ohio, US; & IT - A - 802 645 (MONTECATINI EDISON S.p.A.) 15-02-1968**

(73) Patentinhaber: **HÜLS AKTIENGESELLSCHAFT, Paul-Baumann-Strasse 1, D-4370 Marl 1 (DE)**

(72) Erfinder: **Kötzsch, Hans-Joachim, Dr., Fécampring 28, D-7888 Rheinfelden (DE)**
Erfinder: **Srebny, Hans-Günther, Dr., Augmolter Nr. 3, D-3078 Stolzenau (DE)**
Erfinder: **Vahlensieck, Hans-Joachim, Dr., Im Habiken 2, D-7867 Wehr (DE)**

**EP 0 186 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von Orthoestern des Titans, Zirkons oder Hafniums durch Veresterung der entsprechenden Metallhalogenide oder der Partialester. Unter den Partialestern des Titans, Zirkons oder Hafniums, die im folgenden auch zusammenfassend als Metallsäure- oder Halogen-Partialester bezeichnet werden, sollen dabei Verbindungen der Formel $(RO)_nMeX_{4-n}$ verstanden werden, bei denen R für Alkylreste mit 1 bis 18 C-Atomen, vorzugsweise 2 bis 8 C-Atomen, oder für Arylreste stehen kann, X für Halogen, vorzugsweise Chlor, steht und n Werte zwischen 1 und 3 annehmen kann.

Es ist bekannt, Orthoester, besonders des Titans und des Zirkons, im grosstechnischen Massstab ausschliesslich durch Umsetzung der entsprechenden Tetrachloride mit gewünschten organischen Hydroxyverbindungen in Gegenwart von Aminen als Säureakzeptoren und Lösungsmitteln als Verdünner durchzuführen (vgl. J. Nelles, US-Patent 2 187 821; CA 343 764). Von besonderem Nachteil bei dieser Verfahrensweise ist der grosse Umfang des als Abfall zwangsläufig anfallenden Anteils an Amin-Hydrochloriden. Die auf diese Weise hergestellten Titan- und Zirkonorthoester enthalten neben den meistens vorhandenen Lösungsmittel- und Alkohol- oder Phenolresten beachtliche Mengen an Polymeranteilen wegen der vor allem in den beiden ersten Veresterungsstufen mit Alkoholen auftretenden Nebenreaktion der Alkylhalogenid-Entstehung, die zugleich Wasser bildet, das auf den Metallester hydrolysierend wirkt unter gleichzeitiger qualitätsmindernder Metalloxan-Bildung.

Die Direktveresterung, d. h. die Umsetzung der Titan- bzw. Zirkontetrahalogenide mit organischen Hydroxyverbindungen unter Abspaltung gasförmigen Halogenwasserstoffs, verläuft bekanntlich sehr langsam. Orthoester in Abwesenheit von Aminen sind auf diese Weise nur aus Phenolen, im massiven Überschuss angewandt, erhältlich. Der Phenolüberschuss wird jedoch vom Produkt hartnäckig festgehalten, so dass diese Produkte nicht als reine Orthoester verwendet werden können. Dagegen führt die Direktveresterung bei Verwendung aliphatischer Alkohole in keinem Falle zum Orthoester, sondern läuft langsam bis zum Dihalogendiester («Halbester») und bleibt dann, auch bei Alkoholüberschuss, stehen. Die wegen ihrer stereoselektiven Katalysatoreigenschaften gesuchten Monohalogenotriester sind auf dem Wege der Direktveresterung überhaupt nicht zugänglich. Der ganz besondere Nachteil dieser bekannten Verfahrensweise ist bei aliphatischen Estern zudem die ausgeprägte Neigung zur Nebenreaktion der Alkylhalogenid- und Wasserbildung und somit der Bildung von Polymeranteilen.

Die Partialester des Titans und des Zirkons, insbesondere die Halbester und die Triestermonohalogenide, sind besonders wegen ihrer vorzüglichen Katalysatoreigenschaften bei der Herstellung taktischer Polymerer an Ziegler-Natta-Katalysatoren und bei stereoselektiven Synthesen in der organischen Chemie von erheblichem Interesse. Diese Partialester werden so hergestellt, dass man die Orthoester mit den Tetrahalogeniden im gezielten äquivalenten Verhältnis mischt mit der Absicht, die gewünschte Partialesterstruktur in dem sich bei dieser Arbeitsweise ausbildenden Partialestergemisch, das natürlich stets alle Versterungsstufen neben den aus den Orthoestern eingeschleppten Fremdstoffen und Polymeren enthält, wenigstens zu einem wesentlichen Anteil zu erhalten, wenn auch nicht in reiner Form. Solche Parialestergemische sind mangels reinerer Produkte zur Zeit mit einigermassen brauchbaren Resultaten als Katalysator-Komponenten im Einsatz. Es handelt sich dabei aber nicht um reine Partialester mit eindeutig gesicherter Struktur (vgl. Chem. Abstr. vol. 73 (1970, S. 373) Nr. 14 906 u und Chem. Review, Bd. 1, Nr. 1 (Washington 1961), S. 1 bis 24). Diese geschilderte Situation ist insofern unbefriedigend, als reine Partialester bisher schwer zugängig sind.

Demnach stellte sich die Aufgabe, ein leistungsfähiges Herstellverfahren zu finden, das möglichst selektiv Orthoester des Titans und des Zirkons ergibt. Es soll möglichst kein oder nur ein erheblich verminderter Anfall an Ammoniumhalogenid erfolgen.

Gegenstand der Erfindung ist die Herstellung der Orthoester aus den Halogeniden oder den Partialestern gemäss den Patentansprüchen 1 und 2.

Ein wesentlicher Vorteil des erfindungsgemässen Verfahrens ist sein schneller und unverzüglicher Reaktionsablauf und ganz besonders die in jedem Einzelfall etwa quantitative Produktausbeute bei vollständigem Ausbleiben von Nebenreaktionen, obwohl z. B. Verbindungen des Typs $Ti(OSiR_{3'})_4$ als bemerkenswert stabil bekannt sind (vgl. Encycopedia of Chemical Technology, Vol. 20, 2. Ed., S. 452) und mit deren Bildung durch Umesterung gemäss bisherigem Kenntnisstand zu rechnen war.

Gegenüber dem herkömmlichen Verfahren der Herstellung von Orthoestern unter Verwendung von Säureakzeptoren bietet das erfindungsgemässe Verfahren den ausserordentlich wichtigen Vorteil, dass der Zwangsanfall an Ammoniumsalzen günstigstenfalls vermieden und mindestens jedoch halbiert wird.

Das erfindungsgemässe Verfahren entspricht prinzipiell der nachstehenden schematischen Reaktionsgleichung (1)

$$-\overset{|}{\underset{|}{Me}}X + (RO)_{4-n}-SiR'_n- $$

$$-\overset{|}{\underset{|}{Me}}OR + X_p(OR)_{4-n-p}SiR'_n,$$

in der Me, X und R die obengenannten Bedeutungen haben, R' für Alkylgruppen mit 1 bis 4 C-Atomen steht, n Werte von 1 bis 3 und p Werte von 1

bis 3 annehmen kann mit der Bedingung, dass in der Formel für die Alkyl-alkoxy-halogensilane $2 \leqq n+p \leqq 4$ ist. Beim Einsatz von Mono- oder Dialkylalkoxysilanen bildet sich demzufolge zuerst das Chloralkoxymono- oder -dialkylsilan, ehe eine weitere Alkoxygruppe des Silans mit einem weiteren Halogenatom der Metallverbindung reagiert.

Jede der drei Partialesterstufen kann selbstverständlich auch in an sich bekannter Weise weiter verestert werden, beispielsweise mit Aminen und organischen Hydroxyverbindungen (ROH) unter Abspaltung von Aminhydrohalogeniden. Dabei ist oft eine vollständige Isolierung der jeweiligen Partialesterstufe nicht notwendig.

Die Isolierung der erfindungsgemäss hergestellten Metallsäure-orthoester und der bei dem Verfahren entstehenden Silanhalogenide erfolgt je nach den physikalischen Eigenschaften dieser Produkte in an sich bekannter Weise nach den üblichen Methoden, die z. B. bei der Destillation, Vakuumdestillation, Feststoffgewinnung, Kristallisation angewendet werden.

Ausgangsstoffe für das erfindungsgemässe Verfahren sind einerseits die Tetrachloride, -bromide und -jodide des Titans, des Zirkons und des Hafniums, wobei bevorzugt die Chloride eingesetzt werden, und andererseits Organosilanester der folgenden Formel I:

$$R'_nSi(OR)_{4-n}\ (n=1, 2 \text{ oder } 3) \qquad (I),$$

in der R gesättigte oder ungesättigte aliphatische Reste, die verzweigt und/oder cyclisch und/oder aromatisch substituiert sind und/oder Ethersauerstoffbrücken enthalten können, oder aromatische Reste, die Kohlenwasserstoff- und/oder Halogen- und/oder Nitrosubstituenten tragen können, bedeuten. R' bedeutet gleiche oder verschiedene Alkylgruppen mit 1 bis 4 C-Atomen.

Zu diesen Organosilanestern zählen Trialkyl-, Dialkyl- und Monoalkylsilylester.

Geeignete Trialkylsilylester, die unter die allgemeine Formel I fallen, sind beispielsweise die Trimethyl-, die Triethyl-, die Ethyldimethyl-, Propyldimethyl-, n-Butyldimethyl, Isobutyldimethyl-, Tertiärbutyldimethyl- und Tripropylsilylester von Methanol, Ethanol, n- und iso-Propanol, Allylalkohol, n-, iso-, sekundär- und tertiär-Butanol, Cyclopentanol, Cyclohexanol, 2-Ethylhexanol, den Octanolen, den Nonanolen, Decanol, Dodecylalkohol, Cetylalkohol, Octadecylalkohol, Oleanol, iso-Borneol, Menthol, Ethylenglykolmonomethylether, Triethylenglykolmonomethylether, 2-Methoxypropanol, 1-Methoxypropanol-(2), Benzylalkohol, Benzhydrol, Phenol, o-, m- und p-Cresol, den Xylenolen, o-, m- und p-Chlor-, -Brom- bzw. -Jod-phenol, 4-Chlor-3,5-xylenol, 2,4,6-Trichlor-3,5-xylenol, Pentachlorphenol, Nonylphenol, α- bzw. β-Naphthol, 9-Anthranol etc. Die aromatischen Hydroxyverbindungen haben demzufolge als bevorzugte Alkylsubstituenten Methyl- und Ethylgruppen.

Für die Durchführung des erfindungsgemässen Verfahrens geeignete Dialkylsilyldiester der allgemeinen Formel I sind beispielsweise die Dimethyl-, Ethylmethyl-, Propylmethyl-, n-Butylmethyl-, Isobutylmethyl-, Diethyl- und Dipropylsilyldiester der aufgeführten organischen Hydroxyverbindungen.

Für die Durchführung des erfindungsgemässen Verfahrens geeignete Alkylsilantriester der allgemeinen Formel I sind bespielsweise die Methyl-, Ethyl-, n-Propyl-, Isopropyl-, n-Butyl-, Isobutyl- und Tertiärbutylsilyltriester der aufgeführten organischen Hydroxyverbindungen.

Die genannten Alkylsilylester lassen sich in bekannter Weise leicht herstellen, wie z. B. durch Umsetzung von Alkylchlorsilanen oder Alkylsilylaminen mit organischen Hydroxyverbindungen.

Das erfindungsgemässe Verfahren kann ggf. in inerten Lösungsmitteln durchgeführt werden. Geeignete inerte Lösungsmittel sind selbstverständlich die bei der erfindungsgemässen Reaktion entstehenden Alkylalkoxyhalogensilane. Es eignen sich aber auch aliphatische, aromatische und/oder chlorierte Kohlenwasserstoffe und/oder Ether. Im einzelnen sind dies beispielsweise die Pentane, Hexane, Heptane, das Isooctan, Cyclohexan, Methylcyclohexan, Dekalin, Benzinfraktionen wie Petrolether oder Ligroin, Tetralin, Benzol, Toluol, die Xylole, Aromatenbenzine wie Shell-Sol H, Methylenchlorid, Chloroform, Tetrachlorkohlenstoff, trans-Dichlorethylen, Trichlorethylen, Perchlorethylen, Chlorbenzol, die Dichlorbenzole, 1,1,1-Trichlorethan, Trichlortrifluorethan, 1,1,1,3-Tetrachlorpropan, Diisopropylether, Tetrahydrofuran, Ethylenglykoldiethylether usw.

In praxi wird das erfindungsgemässe Verfahren in einem normalen Rührreaktor mit Rückflusskühler durchgeführt, selbstverständlich unter wasserfreien Bedingungen, indem man in der Regel das Titan-, Zirkon- oder Hafniumhalogenid, ggf. zusammen mit einem geeigneten Lösemittel oder Suspensionsmedium, vorlegt, auf Reaktionstemperatur bringt und schliesslich den Alkylsilanester eindosiert, und zwar, je nachdem welcher Veresterungsgrad gewünscht wird, in der Menge von einem, zwei, drei oder vier Äquivalenten.

Das erfindungsgemässe Verfahren wird vorzugsweise bei Normaldruck durchgeführt, jedoch kann auch die Anwendung von Überdruck in bestimmten Fällen von Vorteil sein. Dagegen wird Vakuum angewandt, wenn die Siedetemperaturen ggf. gesenkt werden sollen.

Vom gewünschten Veresterungsgrad hängt die Wahl der Reaktionstemperatur ab. Die Mono- und Diester bilden sich bereits sehr leicht und schnell bei Raumtemperatur. Um eventuelle Startverzögerungen zu vermeiden, ist es jedoch von Vorteil, zumindest zu Beginn mit leicht erhöhter Temperatur zu arbeiten. Der dafür bevorzugte Temperaturbereich liegt zwischen 40°C und 120°C. Bei lösungsfreiem Arbeiten ist es zweckmässig, als Arbeitstemperatur die Siedetemperatur des sich bildenden Alkylhalogensilans zu wählen, falls sie in diesem vorstehend als bevorzugt beschriebenen Temperaturbereich liegt.

Die Triester und Orthoester werden vorzugsweise bei höheren Temperaturen, nämlich im Temperaturbereich zwischen 120°C und 230°C, hergestellt. Dabei kann es von Vorteil sein, das entstehende Halogenalkysilan während der Reaktion abzudestillieren. Der Rührreaktor wird zu diesem Zweck mit einer Kolonne ausgerüstet, um ein Mitdestillieren noch nicht umgesetzten Silanesters zu unterbinden.

Die sofortige Abdestillation des bei der Reaktion entstehenden Halogensilans ist jedoch nicht in allen Fällen erforderlich. Feste Metallsäurepartialester können erfindungsgemäss auch durch Auskristallisieren aus der abreagierten Reaktionslösung gewonnen und mit Hilfe der üblichen, gängigen Methoden der Feststoffabtrennung isoliert werden.

Eine andere Ausgestaltungsform des erfindungsgemässen Verfahrens ist das Vorlegen der für den gewünschten Veresterungsgrad notwendigen äquivalenten Menge Alkylsilanester, vorzugsweise bei dessen Siedetemperatur, und nachfolgend das Eindosieren des Titan-, Zirkon- oder Hafniumtetrachlorids, ggf. – und die beiden letzteren Metallchloride vorzugsweise – gelöst in einem geeigneten inerten Lösemittel.

Eine besondere Ausgestaltungsform des erfindungsgemässen Verfahrens ist die Veresterung der Titan-, Zirkon- oder Hafniumchloride mit in situ erzeugten Estern der allgemeinen Formel I. Die Durchführung dieser erfindungsgemässen Verfahrensweise erfolgt vorzugsweise bei Normaldruck, und zwar wird das Metallhalogenid vorgelegt zusammen mit einem Überschuss von 0,1 bis 6 Äquivalenten eines Trialalkylchlorsilans. Das vorgelegte Gemisch der Ausgangsstoffe wird zum Sieden erhitzt. Anschliessend wird die Esterkomponenente in Form der organischen Hydroxylverbindung (ROH) unter ständigem Rühren flüssig eindosiert, zum Beispiel durch ein in die siedende flüssige Phase der Reaktionsmischung eintauchendes Kapillarrohr, und zwar mit einer der Gechwindigkeit des Reaktionsablaufs entsprechenden Zulaufgeschwindigkeit und in der dem gewünschten Veresterungsgrad entsprechenden äquivalenten Menge. Dabei wird Chlorwasserstoff frei, der über den Rückflusskühler und einen bei tiefer Temperatur arbeitenden Gaskühler zur Wiederverwendung abgeführt wird. Nach Beendigung der Zuführung wird der Ansatz am Rückfluss so lange gekocht, bis aller Chlorwasserstoff ausgetrieben ist (dies ist im allgemeinen nach Ablauf von ca. 30 Minuten der Fall) und schliesslich aufgearbeitet, beispielsweise durch Abdestillieren des Trialkylchlorsilans usw., oder, wenn es sich um feste Reaktionsprodukte handelt, beispielsweise durch Auskristallisieren usw.

Die erfindungsgemässe Reaktion führt nicht mit allen vorgenannten Organosilanestern bis zur vierten Veresterungsstufe, d.h. zur Herstellung der entsprechenden Metallsäureorthoester. Insbesondere die Organosilanalkylester ermöglichen nur die Herstellung von Metallsäurepartialestern bis zur dritten Veresterungsstufe. Selbst beim Einsatz von mehr als drei Mol äquivalenten Organosilanalkyestern pro Mol Metallhalogenid erhält man nur Metallsäurepartialester mit maximal drei Alkoxygruppen pro Metallatom. Dagegen setzten sich Organosilanarylester mit den Metallhalogeniden bis zur vierten Veresterungsstufe um. Nach der erfindungsgemässen Verfahrensweise lassen sich demzufolge auch die gewünschten Metallsäureorthoarylester in einfacher Weise in sehr reiner Form herstellen.

Erfindungsgemäss lassen sich die Orthoalkylester der genannten Metallsäuren in der Weise herstellen, dass man einen Metallsäurepartialalkylester durch die erfindungsgemässe Umsetzung von Metallhalogenid mit Organosilanalkylestern herstellt und nach der destillativen Abtrennung des Alkylhalogensilans die Reaktion zum Orthoester in an sich bekannter Weise durchführt. Ohne weitere Isolierung des Partialesters wird das dann resultierende Reaktionsgemisch mit einem als Säureakzeptor fungierenden Amin und der noch erforderlichen stöchiometrischen, auf den restlichen Halogengehalt bezogenen Menge des Alkylalkohols zur Reaktion gebracht. Dabei wird unter Bildung des Orthoesters der restliche Halogenidgehalt des Partialesters in Form von Amin-hydrohalogenid gebunden. Diese Reaktion ist nahezug quantitativ und praktisch frei von Nebenreaktionen.

Eine vollständige Isolierung der Partialester ist nicht nötig. Zur Herstellung besonders reiner Tetraalkylester ist jedoch auch die Verwendung vollständig isolierter Partialester möglich.

Gegenüber der an sich bekannten Verfahrensweise der Verwendung der Tetrahalogenide als Ausgangskomponenten stellt schon der reduzierte Anfall von Aballsalzen einen erheblichen Vorteil dar. Der wesentlichste Vorteil der erfindungsgemässen Verfahrensweise und Verwendung der Partialester bei der Herstellung der Orthoester ist jedoch das Ausbleiben der als Nebenreaktion gefürchteten Alkylchlorid- und Wasserbildung, insbesondere bei Verwendung der Monohalogentriester und der Dihalogendiester als Ausgangskomponenten, so dass die auf diese Weise hergestellten Orthoester in höheren Ausbeuten entstehen und wesentlich reiner, beispielsweise frei von Polymeren, sind als die entsprechenden Orthoester, die nach den bisher bekannten Verfahren hergestellt wurden.

Die hergestellten Metallsäureester, und insbesondere die Partialester und die ohne Aminzusatz oder nur mit Hilfe von gegenüber herkömmlichen Verfahren verringerten Mengen Amin hergestellten Orthoester, erfüllen hinsichtlich ihrer Reinheit bzw. ihres Wirkstoffgehalts sehr hohe Qualitätsanforderungen. Ihre Aufarbeitung geschieht in der Regel durch einfaches Ausdampfen des entstandenen Halogenorganosilans und evtl. des verwendeten Lösemittels, ggf. im Vakuum. Bei den Orthoestern, bei deren Herstellung zu einem Teil das an sich bekannte Aminverfahren angewandt wurde, muss ggf. noch das Ammoniumsalz abgetrennt werden. Die auf diese Weise gewonnenen Metallsäurepartial- und -orthoester

sind aufgrund ihrer befriedigenden Reinheit bereits für alle bekannten Verwendungszwecke einsetzbar. Als weitere Aufarbeitungsmassnahmen können die üblichen destillativen Methoden, insbesondere die der Vakuumdestillation, Anwendung finden. Für Produkte mit bei Normalbedingungen festem Aggregatzustand können auch die gängigen Methoden der Feststoffabtrennung durch Kristallisation, beispielsweise in einem Kristallisator, der Phasentrennung, beispielsweise durch Sedimentation oder Filtration, und der Trocknung angewandt werden.

Die hergestellten Produkte sind einerseits die ggf. wieder einzusetzenden Trialkylhalogensilane, wie z. B. Trimethylchlorsilan, Trimethylbromsilan, Trimethyljodsilan, Triethylchlorsilan, Ethyldimethylchlorsilan, Propyldimethylchlorsilan, n-Butyldimethylchlorsilan, Isobutyldimethylchlorsilan, Tertiärbutyldimethylchlorsilan, Tripropylchlorsilan etc., oder die Dialkyldihalogen- bzw. Dialkylhalogenalkoxysilane, wie z. B. Dimethyldichlorsilan, Dimethylmethoxychlorsilan, Dimethylethoxychlorsilan, Methylethyldichlorsilan, Methylethylmethoxychlorsilan, Methylethylethoxychlorsilan, Methylisobutyldichlorsilan usw., oder die Alkyltrihalogen- bzw. -dihalogenalkoxy- bzw. -halogendialkoxysilane, wie z. B. Methyltrichlorsilan, Methylmethoxydichlorsilan, Methyldimethoxychlorsilan, Ethyltrichlorsilan, Ethylethoxydichlorsilan, Ethyldiethoxychlorsilan, Isobutyltrichlorsilan etc., und andererseits die gewünschten Metallester. Unter letztere fallen Monoestertrihalogenide, Diesterhalogenide, Triestermonohalogenide und Orthoester.

Als Beispiele seien genannt:

Methoxytitantrichlorid, Methoxyzirkontrichlorid, Ethoxytitantrichlorid, Ethoxyzirkontrichlorid, n-Propoxytitanchlorid, n-Propoxyhafniumtrichlorid, Isopropoxytitantrichlorid, Isopropoxyzirkonchlorid, Allyloxytitantrichlorid, die Butoxytitan- (bzw. Zirkon- oder Hafnium-)trichloride, Cyclohexyloxytitantrichlorid, 2-Ethylhexoxytitantrichlorid, 2-Ethylhexoxyzirkontrichlorid, ω-Methoxytriethylenglykoloxytitantrichlorid, 2-Methoxyisopropoxytitantrichlorid, Phenoxytitantrichlorid, Phenoxyzirkontrichlorid, p-Bromphenoxytitanchlorid, p-Jodphenoxytitantrichlorid etc.

Beispiele für Diesterhalogenide sind:

Diethoxytitan- (oder -zirkon-)dichlorid, Diethoxytitan- (oder -zirkon-)dibromid, Diethoxytitandijodid, Di-n-propoxytitandichlorid, Di-n-propoxyzirkon- (oder -hafnium-)dichlorid, Diisopropoxytitandichlorid, Diisopropoxyzirkondichlorid, Diallyloxytitandichlorid, die di-Butoxytitan- (bzw. Zirkon- oder Hafnium-)dichloride, Dicetyloxytitandichlorid, Di-2-methoxyisopropoxytitandichlorid, Di-2-methoxyisopropoxyzirkondichlorid, Dibenzyloxytitandichlorid, Dibenzhydryloxytitandichlorid, Dibenzhydryloxyzirkondichlorid, Diisobornyloxytitandichlorid, Diisobornyloxyzirkondichlorid, Diphenoxytitanchlorid, Di-p-cresyloxytitandichlorid, Di-(4-chlor-3,5-xylenoxy)titandichlorid, Di-alpha-naphthoxytitandichlorid, Di-alpha-naphthoxyzirkondichlorid, Di-p-nonylphenoxytitandichlorid, Di-9-anthranoloxytitandichlorid. Weiterhin lassen sich die entsprechenden Triestermonohalogenide sowie folgende Orthoester beispielsweise herstellen:

Tetramethoxytitan, Tetraethoxytitan, Tetraethoxyzirkon, Tetra-n-propoxytitan, Tetra-n-propoxyzirkon, Tetra-n-propoxyhafnium, Tetraallyltitanat, Tetraallylzirkonat, die Tetrabutoxy- (bzw. -zirkon- oder -hafnium-)Verbindungen, Tetra-2-ethylhexyltitanat, Tetra-2-ethylhexylzirkonat, Tetracyclohexyltitanat, Tetracyclohexylzirkonat, Tetracetylzirkonat, Tetraisobornyltitanat, Tetraisobornylzirkonat, Tetrastearyltitanat, Tetrastearylzirkonat, Tetra-2-methoxyisopropoxytitan, Tetra-2-methoxyisopropoxyzirkon, Tetrakis-ω-methoxytetraethylenglykoloxytitan, Tetrakis-ω-methoxytetraethylenglykoloxyzirkon, Tetrabenzyltitanat, Tetrabenzylzirkonat, Tetrabenzhydryltitanat, Tetrabenzhydrylzirkonat, Tetracresyltitanat, Tetracresylzirkonat, Tetraxylenyltitanat, Tetraxylenylzirkonat, Tetrakisnonylphenoxytitan, Tetrakisnonylphenoxyzirkon, Tetra-4-chlor-3,5-xylenoxytitan.

Diese in durchweg nahezu quantitativen Ausbeuten hergestellten Produkte sind von bisher noch nie erreichter hoher Reinheitsqualität. Erkennbar wird diese Qualität besonders an ihren Spektraldaten und auch an anderen Analysenwerten. Es überrascht daher nicht, dass die nach dem erfindungsgemässen Verfahren hergestellten Produkte mit ihren physikalischen Daten, insbesondere z. B. mit Schmelzpunkten, Färbungen, Dichten und Viskositäten, von den bisher beschriebenen an nur vermeintlich oder in unreiner Form vorliegenden Stoffen gleicher Benennung gemessenen und offensichtlich korrekturbedürftigen Daten erheblich abweichen, und in den meisten Fällen wesentlich andere Eigenschaften besitzen als bisher beschrieben worden ist.

Die Orthoester und die Partialester finden vielseitige und breite Anwendung auf den verschiedensten Gebieten. So dienen sie beispielsweise als Katalysatoren bzw. Cokatalysatoren für die Polymerisation und Copolymerisation von Olefinen, Vinylchlorid, Styrol, Dienen, Vinylethern, Epoxiden, Alkylenoxiden, Aldehyden; als Veresterungs- und Umesterungskatalysatoren in der organischen und metallorganischen Monomerchemie sowie bei der Herstellung von gesättigten und ungesättigten Polyestern, Polyesteramiden und -imiden und Polyamiden mit Hilfe z. B. der Polykondensations- und -additionsreaktionen; in Lacken und Harzen als Bindemittel, zur Thixotropierung, zur Modifizierung rheologischer Eigenschaften und als Verarbeitungshilfsmittel; zur Oberflächenbehandlung von Glas und Mineralstoffen; als Veredelungsmittel z. B. für Textilien, Leder und Papier, insbesondere zum Binden, Hydrophobieren oder Mattieren; zur Herstellung von Spezialkeramik; als Haftmittelkomponenten in Klebstoffen und bei der Herstellung glasfaserverstärkter Kunststoffe usw.

Die nachfolgenden Beispiele erläutern die Erfindung, ohne jedoch ihren Umfang zu begrenzen:

Beispiel 1a)

Die Reaktionsapparatur besteht aus einem beheizbaren 1000 ml-Mehrhalskolben mit Innenthermometer, Rührer, Tropftrichter und Rückflusskühler.

Es werden 285 g = 1,5 Mol $TiCl_4$ in 700 ml n-Hexan vorgelegt. Hierzu tropft man unter Rühren bei Raumtemperatur 156 g = 1,5 Mol $(H_3C)_3Si(OCH_3)$. Es bildet sich ein gelber Niederschlag, und die Innentemperatur steigt von 22°C auf 62°C. Man lässt ca. 45 Minuten rühren wobei unter Abkühlung weiterer Niederschlag ausfällt. Anschliessend wird der Niederschlag abfiltriert und im Vakuum getrocknet. Man erhält 264 g $(CH_3O)TiCl_3$ als hellgelbes Pulver.

Beispiel 1b)

Die in Beispiel 1a) beschriebene Reaktionsapparatur wird in der Weise modifiziert, dass ein 500 ml-Mehrhalskolben verwendet wird. 47,5 g = 0,25 Mol $TiCl_4$ werden in 150 ml Dichlormethan gelöst und langsam unter Rühren mit 52 g = 0,5 Mol $(H_3C)_3Si(OCH_3)$ versetzt. Während der stark exothermen Reaktion scheidet sich ein blassgelber Niederschlag ab. Anschliessend werden Dichlormethan und Trimethylchlorsilan am Rotationsverdampfer bei 0,5 mbar abdestilliert. Man erhält 44,4 g $(H_3CO)_2TiCl_2$ als feines, blassgelbes Pulver. Mp.: Zersetzung bei 165°C bis 170°C.

Beispiel 2a)

In einer wie in Beispiel 1 beschriebenen Reaktionsapparatur werden 285 g = 1,5 Mol $TiCl_4$ vorgelegt und auf 10°C abgekühlt. Hierzu tropft man innerhalb von 10 Minuten 177 g = 1,5 Mol $(H_3C)_3Si(OC_2H_5)$. Es bildet sich ein gelber Niederschlag, und die Temperatur steigt kontinuierlich bis auf 50°C. Beim Abkühlen bis auf Raumtemperatur fällt weiterer gelber Niederschlag aus. Anschliessend wird das gebildete Trimethylchlorsilan im Vakuum und ca. 35°C Badtemperatur abdestilliert. Man erhält 299 g $(C_2H_5O)TiCl_3$ in Form eines gelben, an der Luft stark rauchenden Pulvers. Mp.: 81°C.

Beispiel 2b)

In einer wie in Beispiel 1 beschriebenen Reaktionsapparatur werden 285 g = 1,5 Mol $TiCl_4$ vorgelegt und auf 3°C abgekühlt. Hierzu tropft man innerhalb von 5 Minuten 354 g = 3 Mol $(H_3C)_3Si(OC_2H_5)$. Es bildet sich ein gelber Niederschlag, und die Temperatur steigt bis auf 51°C. Während der Abkühlung auf 8°C scheidet sich weiterer Niederschlag ab. Anschliessend wird das gebildete Trimethylchlorsilan im Vakuum bei 40°C abdestilliert. Man erhält 313 g $(C_2H_5O)_2TiCl_2$ in Form eines blassgelben Pulvers, das sich an feuchter Luft langsam zersetzt. Mp.: 80 bis 83°C.

Analyse:
Cl: 34,0% (ber. 33,9)
Ti: 22,8% (ber. 22,9).

IR: Gemessen in $CCl_4$ sowie $CCl_4$-Kompensation im Referenzstrahlengang.

Charakteristische Absorptionen in $cm^{-1}$: 2992, 2970, 2948, 2938, 1470, 1450, 1400, 1385, 1357, 1270, 1160, 1110, 1072, 1022, 940, 878, 623, 575, 540, 480, 460.

Beispiel 2c)

Die Reaktionsapparatur besteht aus einem beheizbaren 500 ml-Mehrhalskolben, der mit Innenthermometer, Rührer, Tropftrichter sowie einer Füllkörperkolonne (Füllhöhe 50 cm, Innendurchmesser 50 mm) mit automatischem Kolonnenkopf und Rückflusskühler versehen ist. Bei Raumtemperatur werden 148 g = 1 Mol Dimethyldiethoxysilan vorgelegt. Unter die Oberfläche des Silans tropft man innerhalb von 22 Minuten 95 g = 0,5 Mol $TiCl_4$. Die Temperatur steigt auf 78°C, und der sich anfangs bildende gelbe Niederschlag löst sich auf. Das entstandene Dimethylmonoethoxychlorsilan wird abdestilliert, und man erhält einen gelbbraunen, hochviskosen Rückstand, der langsam kristallisiert. Es lassen sich 101 g grobkristallines $(C_2H_5O)_2TiCl_2$ isolieren.

Analyse:
Cl: 34,6% (ber. 33,9)
Ti: 22,1% (ber. 22,9).

Das Produkt zeigt die gleichen IR-Absorptionslinien wie dasjenige des Beispiels 2b).

Beispiel 2d)

Die Reaktionsapparatur besteht aus einem 2000 ml-Mehrhalskolben mit Innenthermometer, Rührer, Tropftrichter und Rückflusskühler. Es wurden 708 g = 6 Mol $(H_3C)_3Si(OC_2H_5)$ vorgelegt und auf 6°C abgekühlt. Innerhalb von 15 Minuten werden 570 g = 3 Mol $TiCl_4$ hinzugetropft. Die Temperatur steigt bis 58°C, wobei sich die Lösung ab ca. 46°C trübte. Nach dem Abkühlen wird der entstandene Feststoff vom Trimethylchlorsilan über eine Fritte abfiltriert, mit Heptan gewaschen und im Vakuum getrocknet. Man erhält 576 g $(C_2H_5O)_2TiCl_2$ als hellgelbes Pulver.

Analyse:
Cl: 33,6% (ber. 33,9)
Ti: 22,8% (ber. 22,9).

IR wie in Beispiel 2b).

Beispiel 2e)

Die Reaktionsapparatur besteht aus einem beheizbaren 500 ml-Mehrhalskolben mit Innenthermometer, Rührer sowie Tropftrichter sowie einer Füllkörperkolonne (Füllhöhe 130 cm, Durchmesser 50 mm) mit automatischem Kolonnenkopf und Rückflusskühler. Bei Raumtemperatur wurden 236 g = 2 Mol $(H_3C)_3Si(OC_2H_5)$ vorgelegt und hierzu innerhalb von 7 Minuten 95 g = 0,5 Mol $TiCl_4$ getropft. Die Temperatur steigt von 22°C bis auf 65°C , und es bildet sich eine gelbliche, leicht trübe Lösung, die zum Sieden erhitzt wird. Das

bei der Reaktion entstandene Trimethylchlorsilan wird kontinuierlich abdestilliert. Im Sumpf verbleiben 152 g einer leicht viskosen, gelben Lösung. Anschliessend wird am Rotationsverdampfer das nicht umgesetzte Trimethylethoxysilan im Wasserstrahlvakuum abdestilliert, und man erhält 108 g einer blassgelben, hochviskosen Flüssigkeit der Zusammensetzung $(C_2H_5O)_{2,7}TiCl_{1,3}$.

Analyse:
Cl: 21,0%
Ti: 22,0%.

Beispiel 2f)

Die Darstellung von $(C_2H_5O)_2TiCl_2$ erfolgt analog Beispiel 2b). Es werden 380 g = 2 Mol $TiCl_4$ und 472 g = 4 Mol $(H_3C)_3Si(OC_2H_5)$ eingesetzt. Hieraus erhält man 413 g $(C_2H_5O)_2TiCl_2$. 410 g dieses Halbesters werden mit 600 ml n-Heptan und 200 g $C_2H_5OH$ (= 9,7% Überschuss) versetzt. In die entstandene weisse Suspension leitet man solange $NH_3$ ein, bis die flüssige Phase alkalisch reagiert. Die Dosierung erfolgt so, dass die Reaktionstemperatur 60°C nicht überschreitet. Während der Reaktionszeit von ca. 5 Stunden erhöht man das Flüssigkeitsvolumen um weitere 500 ml n-Heptan. Danach wird das ausgefallene $NH_4Cl$ abfiltriert und mit 350 ml n-Heptan gewaschen. Vom klaren, leicht gelblichen Filtrat wird zunächst das n-Heptan bei 50°C und 100 mbar abdestilliert und dann der Rückstand über eine 30 cm-Vigreux-Kolonne bei 117°C bis 118°C Kopftemperatur und einem Druck von 2 mbar fraktioniert. Man erhält 358,1 g $Ti(CO_2H_5)_4$ als wasserklare, farblose Flüssigkeit.

Beispiel 3a)

In einer wie in Beispiel 1b) verwendeten Reaktionsapparatur werden 132 g = 1 Mol $(H_3C)_3Si(O\text{-}n\text{-}C_3H_7)$ vorgelegt und auf 65°C erwärmt. Hierzu tropft man innerhalb von 3 Minuten unter Rühren und ohne externe Heizung 190 g = 1 Mol $TiCl_4$. An der Eintropfstelle bildet sich sofort ein zitronengelber Niederschlag, und die Sumpftemperatur steigt bis auf 94°C. Anschliessend wird 2 Stunden am Rückfluss gekocht. Während des Abkühlens fällt erneut ein zitronengelber Niederschlag aus. Das während der Reaktion gebildete Trimethylchlorsilan wird im Wasserstrahlvakuum und 50°C Heizbadtemperatur abdestilliert. Man erhält 212 g $(n\text{-}C_3H_7O)TiCl_3$ als gelbes, sehr feuchtigkeitsempfindliches Pulver.

Beispiel 3b)

In einer wie in Beispiel 1b) beschriebenen Reaktionsapparatur werden 132 g = 1 Mol $(H_3C)_3Si(O\text{-}n\text{-}C_3H_7)$ vorgelegt und zum Sieden erhitzt. Innerhalb von 50 Minuten tropft man vorsichtig unter Rühren 95 g = 0,5 Mol $TiCl_4$ hinzu. Nach der Hälfte der Zugabe ist die etwas trübe Lösung zitronengelb und bis Ende der Zugabe gelbbraun. Während der Reaktionszeit fällt die Sumpftemperatur bis auf 67°C. Anschliessend wird das gebildete Trimethylchlorsilan im Wasserstrahlvakuum und 40°C Heizbadtemperatur abdestilliert. Man erhält 116 g $(n\text{-}C_3H_7O)_2TiCl_2$ als viskose, braune Flüssigkeit, die nach einigen Tagen kristallisiert.

Analyse:
Cl: 29,5% (ber. 29,93%)
Ti: 20,0% (ber. 20,22%).

$^1H$-NMR ($CDCl_3$/TMS)
O-$\underline{CH_2}$, tr, 4,54 ppm, 2 H;
$H_3C$-$\underline{CH_2}$, sext, 1,89 ppm. 2 H;
$H_2C$-$\underline{CH_3}$, tr, 1,09 ppm, 3 H.

Beispiel 4a)

In einer wie in Beispiel 1b) beschriebenen Reaktionsapparatur werden 95 g = 0,5 Mol $TiCl_4$ vorgelegt. Hierzu tropft man unter Rühren innerhalb 2 Minuten 66 g = 0,5 Mol $(H_3C)_3Si(O\text{-}i\text{-}C_3H_7)$. Es bildet sich eine goldbraune Lösung, und die Sumpftemperatur steigt von 22,5°C auf maximal 75°C an. Danach lässt man an der Luft abkühlen, und es scheidet sich ein fahlgelber Niederschlag ab. Das während der Reaktion gebildete Trimethylchlorsilan wird im Wasserstrahlvakuum bei 40°C Heizbadtemperatur abdestilliert. Man erhält 107 g $(i\text{-}C_3H_7O)TiCl_3$ als weissgraues, stark hydrolyseempfindliches Pulver.

Beispiel 4b)

In einer wie in Beispiel 1a) beschriebenen Apparatur werden 398 g = 3 Mol $(H_3C)_3Si(O\text{-}i\text{-}C_3H_7)$ vorgelegt und auf 50°C erwärmt. Hierzu tropft man innerhalb von 9 Minuten 285 g = 1,5 Mol $TiCl_4$. Die Sumpftemperatur steigt auf 71,5°C. Man lässt 2 Stunden am Rückfluss kochen und anschliessend abkühlen, wobei sich ein Niederschlag abzuscheiden beginnt. Das bei der Reaktion entstandene Trimethylchlorsilan wird im Vakuum abdestilliert und man erhält 351 g $(i\text{-}C_3H_7O)_2TiCl_2$ als weissgrauen Feststoff.

Analyse:
Cl: 30,1% (ber. 29,93%)
Ti: 20,3% (ber. 20,22%)

$^1H$-NMR ($CDCl_3$/TMS)
O-$\underline{CH}$, hept. 4,93 ppm, 1 H;
HC-$(\underline{CH_3})_2$, d, 1,48 ppm, 6 H.

Beispiel 4c)

Das in Beispiel 4b) beschriebene Verfahren wird in der Weise modifiziert, dass der bei der Abkühlung des Reaktionsansatzes erhaltene Niederschlag abfiltriert und im Vakuum getrocknet wird. Man erhält 181 g $(i\text{-}C_3H_7O)_2TiCl_2$ in Form weisser Kristalle. Mp.: 53 bis 57°C.

Analyse:
Cl: 29,8% (ber. 29,93%)
Ti: 20,8% (ber. 20,22%).

$^1H$-NMR wie in Beispiel 4b).

Die Mutterlauge wird wie in 4b) beschrieben aufgearbeitet.

Beispiel 5a)

In einer wie in Beispiel 2d) beschriebenen Reaktionsapparatur werden 730 g = 5 Mol $(H_3C)_3Si(O\text{-}n\text{-}C_4H_9)$ vorgelegt und auf 80°C erwärmt. Hierzu tropft man unter Rühren 950 g = 5 Mol $TiCl_4$. Man lässt ca. 1 Stunde am Rückfluss kochen. Nach dem Abkühlen wird das während der Reaktion entstandene Trimethylchlorsilan im Wasserstrahlvakuum bei ca. 50°C Heizbadtemperatur abdestilliert. Man erhält 1115 g $(n\text{-}C_4H_9O)TiCl_3$ als fahloranges, licht- und feuchtigkeitsempfindliches Pulver.

Beispiel 5b)

In einer wie in Beispiel 1b) beschriebenen Reaktionsapparatur werden 148 g = 1 Mol $(H_3C)_3Si(O\text{-}n\text{-}C_4H_9)$ vorgelegt und auf 100°C aufgeheizt. Innerhalb von 5 Minuten lässt man unter Rühren 95 g = 0,5 Mol $TiCl_4$ hinzutropfen, wobei sich eine tieforange Lösung bildet. Nach 30 Minuten Kochen am Rückfluss und anschliessendem Abkühlen wird das während der Reaktion gebildete Trimethylchlorsilan im Wasserstrahlvakuum und 50°C Heizbadtemperatur abdestilliert. Man erhält 132,5 g $(n\text{-}C_4H_9O)_2TiCl_2$ als orangerote Flüssigkeit.

Beispiel 6a)

In einer wie in Beispiel 1b) beschriebenen Reaktionsapparatur werden 47,5 g = 0,25 Mol $TiCl_4$ in 100 ml Heptan vorgelegt und auf 106°C aufgeheizt. Hierzu tropft man innerhalb von 20 Minuten unter Rühren 36,5 g = 0,25 Mol $(H_3C)_3Si(O\text{-}i\text{-}C_4H_9)$. Nach dem Abkühlen, wobei sich ein orangefarbener Niederschlag abscheidet, werden Heptan und das während der Reaktion gebildete Trimethylchlorsilan im Vakuum abdestilliert. Man erhält 56 g $(i\text{-}C_4H_9O)TiCl_3$ als orangeroten Feststoff.

Beispiel 6b)

In einer wie in Beispiel 1b) beschriebenen Reaktionsapparatur werden 146 g = 1 Mol $(H_3C)_3Si(O\text{-}i\text{-}C_4H_9)$ vorgelegt und auf 50°C aufgeheizt. Hierzu tropft man unter Rühren innerhalb von 15 Minuten 95 g = 0,5 Mol $TiCl_4$. Die Hauptmenge des gebildeten Trimethylchlorsilans wird zunächst bei Normaldruck, der Rest dann im Vakuum abdestilliert. Man erhält 130 g $(i\text{-}C_4H_9O)_2TiCl_2$ als zunächst orangerote, hochviskose Flüssigkeit, aus der dann weisse Kristalle anfallen. Mp.: 52 bis 53°C.

Analyse:
Cl: 27,0 % (ber. 26,76 %)
Ti: 18,1 % (ber. 17,1 %).

$^1H$-NMR ($CDCl_3$/TMS)
O-$C\underline{H}_2$, d, 4,42 ppm, 2 H;
$H_2$-C-$C\underline{H}$, m, 2,18 ppm, 1 H;
HC-$(C\underline{H}_3)_2$, d, 1,03 ppm, 6 H.

Beispiel 7a)

In einer wie in Beispiel 1b) beschriebenen Reaktionsapparatur werden 41,5 g = 0,25 Mol $(H_3C)_3Si(OC_6H_5)$ in 200 ml Dichlormethan vorgelegt. Hierzu tropft man unter Rühren 17,5 g = 0,25 Mol $TiCl_4$. Die vormals farblose Lösung färbt sich sofort dunkelrot und beginnt dann zu sieden. Nach 30 Minuten Kochen im Rückfluss werden Dichlormethan und das gebildete Trimethylchlorsilan im Vakuum abdestilliert. Man erhält 61,5 g $(C_6H_5O)TiCl_3$ als dunkelvioletten Feststoff.

Anstelle von Dichlormethan können auch andere inerte Lösemittel wie Perchlorethylen, n-Hexan, Cyclohexan, n-Heptan und Xylol verwendet werden.

Beispiel 7b)

In einer wie in Beispiel 1b) beschriebenen Reaktionsapparatur werden 95 g = 0,5 Mol $TiCl_4$ in 200 ml $CH_2Cl_2$ vorgelegt. Hierzu tropft man unter Rühren 166 g = 1 Mol $(H_3C)_3Si(OC_6H_5)$. Die Lösung färbt sich sofort dunkelrot und beginnt dann zu sieden. Nach 30 Minuten Kochen am Rückfluss werden Dichlormethan und das gebildete Trimethylchlorsilan im Vakuum abdestilliert. Man erhält 150 g $(C_6H_5O)_2TiCl_2$ als dunkelroten Feststoff.

Anstelle von Dichlormethan können auch andere Lösemittel wie n-Hexan, Cyclohexan, n-Heptan, Perchlorethylen und Xylol verwendet werden.

## Patentansprüche

1. Verfahren zur Herstellung von Metallsäurearylestern der Formel $Me(OR)_4$, in der R für einen ggf. durch Halogen, Alkyl- oder Nitrogruppen substituierten Arylrest und Me für ein Metall aus der Gruppe Titan, Zirkon und Hafnium stehen, dadurch gekennzeichnet, dass man die entsprechenden Metallhalogenide mit einer solchen Menge eines Organosilanarylesters umsetzt, dass pro Mol Metallhalogenid mindestens 4 Mole Organosilanarylester eingesetzt werden.

2. Verfahren zur Herstellung von Metallsäureorthoalkylestern der Formel $Me(OR)_4$, in der R für gleiche oder verschiedene, gesättigte oder ungesättigte Kohlenwasserstoffreste und Me für ein Metall aus der Gruppe Titan, Zirkon oder Hafnium stehen, durch Veresterung, dadurch gekennzeichnet, dass man Metallsäurepartialester, die durch Umsetzung der entsprechenden Metallhalogenide mit Organosilanestern der Formel $R'_nSi(OR)_{4-n}$, in der R die obengenannte Bedeutung hat und R' für gleiche oder ungleiche Alkylreste mit 1 bis 4 C-Atomen steht, erhalten sind, der Veresterung unterwirft.

## Claims

1. Process for the production of metal acid arylesters of the formula $Me(OR)_4$ in which R stands for an aryl residue optionally substituted by halogen, alkyl or nitro groups and Me for a metal from the group titanium, zirconium and hafnium, characterised in that the corresponding metal halides are reacted with such amount of an organo-

silanearylester that at least 4 mol of organosilanearylester are employed per mol of metal halide.

2. Process for the production by esterification, of metal acid orthoalkylesters of formula $Me(OR)_4$, in which R stands for the same or different saturated or unsaturated hydrocarbon residues and Me for a metal from a group titanium, zirconium or hafnium, characterised in that metal acid partial esters which are obtained by reaction of the corresponding metal halides with organosilaneesters of the formula $R'_nSi(OR)_{4-n}$, in which R stands for the above-indicated meaning and R' for like or unlike alkyl residues with 1 to 4 C-atoms, are subjected to esterification.

## Revendications

1. Procédé pour la préparation d'esters aryliques d'acides métalliques de formule $Me(OR)_4$, dans laquelle R est un radical aryle éventuellement substitué par un halogène ou des groupes alkyle ou nitro, et Me désigne un métal du groupe comportant le titane, le zirconium et l'hafnium, caractérisé en ce qu'on fait réagir les halogénures métalliques correspondants sur une quantité d'un ester arylique d'un organosilane telle que l'on utilise par mole d'halogénure métallique au moins 4 moles d'ester arylique d'organosilane.

2. Procédé pour la préparation, par estérification, d'orthoesters alkyliques d'acides métalliques de formule $Me(OR)_4$, dans laquelle les radicaux R représentent des radicaux hydrocarbonés saturés ou insaturés, identiques ou différents, et Me désigne un métal du groupe comportant le titane, le zirconium ou l'hafnium, caractérisé en ce qu'on soumet à l'estérification des esters partiels d'acides métalliques, qui sont obtenus par la réaction des halogénures métalliques correspondants sur des esters d'organosilane de formule $R'_nSi(OR)_{4-n}$, dans laquelle R a la signification donnée ci-dessus, et les radicaux R' représentent des radicaux alkyle ayant de 1 à 4 atomes de carbone, identiques ou différents.